# EUROPÄISCHE PATENTSCHRIFT

(11) **EP 2 225 585 B1**
(45) Veröffentlichungstag und Bekanntmachung des Hinweises auf die Patenterteilung: **26.09.2012**
(21) Anmeldenummer: 08866721.7
(22) Anmeldetag: 21.10.2008
(51) Int. Cl.: G01S 15/93, G01S 15/87, G01S 13/93, G01S 13/87, G01S 17/93, G01S 17/87

(54) **VERFAHREN ZUM BETREIBEN EINES EINPARKHILFESYSTEMS**
METHOD FOR OPERATING A PARKING ASSISTANCE SYSTEM
PROCÉDÉ POUR FAIRE FONCTIONNER UN SYSTÈME D'AIDE AU STATIONNEMENT

(30) Priorität: 21.12.2007 DE 102007062860; 06.02.2008 DE 102008007667
(43) Veröffentlichungstag der Anmeldung: 08.09.2010
(73) Patentinhaber: Robert Bosch GmbH, 70442 Stuttgart (DE)
(72) Erfinder: HERING, Michael, 71229 Leonberg (DE); REINER, Torsten, 70619 Stuttgart (DE); ALBRECHT, Benno, 73271 Holzmaden (DE)
(86) Internationale Anmeldenummer: PCT/EP2008/064206
(87) Internationale Veröffentlichungsnummer: WO 2009/083288

(56) Entgegenhaltungen:
- WO-A-2007/003242
- DE-A1- 3 540 704
- DE-A1-102006 053 620
- US-A1- 2005 035 879

## Beschreibung

### Stand der Technik

Die vorliegende Erfindung betrifft ein Verfahren zum Betreiben eines Einparkhilfesystems für ein Fahrzeug, wobei das Einparkhilfesystem mehrere jeweils den Nahbereich des Fahrzeugs wenigstens abschnittsweise erfassende Abstandssensoren und mindestens einen den von dem Fahrzeug zurückgelegten Weg erfassenden Wegsensor umfasst. Die Abstandssensoren können in einem ersten Modus betrieben werden, in welchem zur Vermessung von Parklücken aus den während des Vorbeifahrens an einer Parklücke gemessenen Werten zumindest einzelner Sensoren die Länge und/oder Breite der Parklücke bestimmt wird, und sie können in mindestens einem zweiten Modus betrieben werden, in welchem sie als Einparkhilfe für ein Einparkhilfesystem zur Vermeidung von Kollisionen während des Einparkvorgangs eingesetzt werden. Zusätzlich können gegebenenfalls auch noch weitere Betriebsmodi der Abstandssensoren für weitere Funktionen dieses Fahrerassistenzsystems vorgesehen werden.

Die zunehmende Verkehrsdichte und verstärkte Bebauung freier Flächen engen den Verkehrsraum insbesondere in Ballungszentren kontinuierlich ein. Der zur Verfügung stehende Parkraum wird enger, und die Suche nach einer geeigneten Parklücke belastet den Fahrer zusätzlich zum stetig steigenden Verkehrsaufkommen. Insbesondere beim rückwärtigen Einparken in eine Parklücke ist es oft mit erheblichen Schwierigkeiten verbunden, die genaue Größe und Lage der Parklücke richtig einzuschätzen. Dabei sind sich viele Fahrer oftmals nicht sicher, ob ihr Fahrzeug in eine gefundene Parklücke hineinpasst, die zwischen abgestellten Fahrzeugen oder anderen Hindernissen gebildet wird.

Zur Entlastung des Fahrers eines Fahrzeugs beim Einparken sind daher unterschiedlichste Vorrichtungen und Systeme vorgeschlagen worden. Es wurden insbesondere sogenannte Parkpiloten zur Abstandserkennung von die Parklücke begrenzenden Objekten vor allem im hinteren, aber auch im vorderen Fahrzeugbereich (PDC = Park Distance Control, PAS = Parking Aid System), aber auch Systeme zum Auffinden bzw. zur Vermessung von Parklücken (PLV = Parklückenvermessung bzw. PSM = Parking Space Measurement) sowie semiautonome oder vollautonome Parkassistenten vorgeschlagen. Diese Systeme arbeiten mittels berührungslos arbeitenden Abstandssensoren, die vorzugsweise durch Ultraschallsensoren, aber beispielsweise auch durch Infrarotsensoren, Lidarsensoren, Radarsensoren oder ähnliche Sensoren, durch die das Vorhandensein von Objekten berührungslos detektierbar und/oder den Abstand zu Objekten messbar ist, gebildet sein können.

So ist ein Verfahren und System zur Unterstützung des Fahrers bei der Ermittlung von geeigneten Parklücken mittels Parklückenvermessung beispielsweise aus der DE 103 20 723 A1 bekannt. Dabei erfassen seitwärts gerichtete Abstandssensoren bei einer Vorbeifahrt an einer potentiellen Parklücke zunächst ein erstes stehendes Hindernis, dann über eine gewisse Wegstrecke, die von einem Wegsensor erfasst wird, eine zumindest im wesentlichen hindernisfreie mögliche Parklücke und nachfolgend ein zweites stehendes Hindernis. Anschließend kann dem Fahrer die so ermittelte Länge und/oder Tiefe der soeben vermessenen Lücke und/oder eine hieraus abgeleitete Information darüber angegeben werden, ob sein Fahrzeug in diese Lücke zwischen den Hindernissen hineinpasst. Die Messintervallrate bzw. die Abtastrate der Abstandssensoren hängt hier von der Fahrzeugsgeschwindigkeit derart ab, dass sie bei zunehmender Geschwindigkeit erhöht wird. Zusätzlich können die für die Parklückenvermessung benötigten Abstandssensoren auch für eine Einparkhilfe-Funktion (Parkpilot) zur Erkennung von unmittelbar vor oder hinter dem Fahrzeug befindlichen Hindernissen genutzt werden.

Bei einem Parkpilotsystem werden die Abstände zwischen dem eigenen Fahrzeug und davor bzw. dahinter befindlichen Objekten gemessen. Hierfür werden üblicherweise im Front- bzw. Heckstoßfänger des Fahrzeugs angeordnete Abstandssensoren verwendet. Aus den gemessenen Abstandsinformationen wird ebenfalls mittels spezieller Verfahren der Abstand zwischen dem Stoßfänger des Fahrzeugs und in der Nähe befindlichen anderen Objekten bzw. Fahrzeugen berechnet. Der Fahrer erhält eine entsprechende akustische oder optische Information, die den berechneten bzw. gemessenen Abstand angibt und ggf. eine gesonderte Warnung, sobald der Abstand zwischen seinem Fahrzeug und anderen Hindernissen einen kritischen Wert unterschreitet.

Insbesondere seitlich am Fahrzeug angebrachte Sensoren werden oftmals sowohl für die Funktion der Parklückenvermessung als auch für das Parkpilot-System verwendet. Die Systeme bzw. Funktionen stellen allerdings unterschiedliche Anforderungen an den Betrieb der Sensorik. So benötigt die Parklückenvermessung eine möglichst hohe Daten- bzw. Messrate der seitlich angebrachten Sensoren. Für das Parkpilot-System müssen dagegen alle Sensoren, d.h. sowohl die seitlich angeordneten als auch die im Front- oder Heckstoßfänger des Fahrzeugs angeordneten Sensoren möglichst gleichmäßig angesteuert werden, was jedoch eine Reduzierung der maximalen Messrate bedingt um eine gegenseitige Beeinflussung bzw. Störung der Sensoren zu verhindern. Daraus folgt, dass der gleichzeitige Betrieb beider Systeme bzw. Funktionen mit dafür doppelt genutzten Abstandssensoren nicht möglich ist, da bei aktiver Parklückenvermessung die hohe Messrate der äußeren Sensoren einen zuverlässigen Betrieb des Parkpilots verhindert, und bei aktivem Parkpilot die Messrate der äußeren Sensoren nicht für eine zuverlässige Parklückenvermessung ausreicht.

Aus der DE 102 06 764 A1 ist ein kombiniertes Einparkhilfesystem bekannt, bei dem für die seitlich am Fahrzeug vorgesehenen Abstandssensoren zwei Messmodi vorgesehen sind. Dabei werden zur Suche nach einer geeigneten Parklücke bzw. zur Parklückenvermessung einerseits und zur Abstandsbestimmung andererseits jeweils unterschiedliche Messverfahren verwendet, die sich in der Häufigkeit der Aussendung von Messsignalen voneinander unterscheiden. So werden die seitlichen Abstandssensoren bei der Suche nach einer geeigneten Parklücke mit einer hohen Frequenz betrieben, bei der vorzugsweise alle 20 bis 40 ms ein Signal ausgesendet wird. Bei der nachfolgenden Abstandsvermessung zur Warnung vor drohenden Kollisionen werden nicht nur die seitlichen, sondern auch die an der Frontseite und an der Rückseite angeordneten Abstandssensoren betrieben. Dabei wird die Sendefolge der seitlichen Sensoren auf eine Signalaussendung etwa alle 120 bis 240 ms reduziert. Die Umschaltung zwischen diesen beiden Modi erfolgt vorzugsweise automatisch in der Art, dass nach der Erkennung einer ausreichend großen Parklücke von dem Parklückenvermessungsmodus in den Abstandswarnmodus umgeschaltet wird.

Aus der DE 101 47 443 A1 ist eine Umfeldüberwachungsvorrichtung mit mehreren Abstandssensoren für ein Kraftfahrzeug bekannt, bei der mehrere Messprogramme der Sensoren für verschiedene Anwendungen zeitgleich oder zeitversetzt durchführbar sind. Dabei werden die Sensoren jeweils in einem geeigneten Betriebsmodus angesteuert und können so als Einparkhilfe beispielsweise zur Abstandswarnung oder zur Vermessung von Parklücken verwendet werden. Von einer Steuerungseinheit wird in Abhängigkeit von der gewünschten Überwachung festgelegt, welcher Sensor in welcher Betriebsart und mit welcher Frequenz Daten liefern soll, wobei auch Fahrzeugdaten wie die Fahrzeuggeschwindigkeit mit einbezogen werden können. Die Aktivierung einer bestimmten Funktion kann dabei von einem Fahrzeugzustand, beispielsweise der Fahrzeuggeschwindigkeit oder dem Einlegen des Rückwärtsgangs, oder alternativ auch von einer manuellen Aktivierung über eine Bedieneinheit abhängen.

Aus der DE 102 16 346 A1 ist ein Verfahren der eingangs genannten Art zum Betreiben eines Einparkhilfesystems für ein Fahrzeug bekannt, bei dem mehrere Abstandssensoren in zwei unterschiedlichen Messmodi einerseits als Parkpilot zur Warnung vor drohenden Kollisionen beim Einparken sowie andererseits zur Vermessung von Parklücken eingesetzt werden. Damit gleichzeitig beide Funktionen ausgeführt werden können, erfolgt ein ständig zwischen den beiden Modi hin und her wechselndes Betreiben der Sensoren, wobei die Wechselfrequenz relativ hoch sein kann. Auch können je nach der Fahrzeuggeschwindigkeit während des Vorbeifahrens an einer Parklücke die Messungen mittels eines den seitlichen Bereich des Fahrzeugs erfassenden Abstandssensors in unterschiedlichen Zeitintervallen erfolgen. Ein ständiges Hin und Her Wechseln zwischen den beiden Modi ist allerdings mit nachteiligen Zeitverlusten verbunden, da bei jedem Wechsel eine andere Sensor-Kennlinie geladen werden muss, was jeweils ca. 100 ms dauern kann. Während dieser Ladezeit kann das System keine Entfernungsmessungen durchführen, so dass ein alternierender Betrieb der Funktionen Parkpilot und Parklückenvermessung bzw. Parklückenlokalisierung mit einer kurzzeitigen Umschaltung der Kennlinien nicht möglich ist. Die resultierenden Datenraten wären dann so stark reduziert, dass sowohl die erforderliche schnelle Reaktion der Parkpilot-Funktion als auch die erforderliche Genauigkeit der Funktion Parklückenvermessung bzw. Parklückenlokalisierung nicht mehr erreicht werden könnte. Dies gilt bereits für Fahrzeuggeschwindigkeiten oberhalb von ca. 2 km/h.

Darüber hinaus ist der US 2005/0035879 A1 ein Verfahren zum Betrieb eines Parkassistenzsystems bekannt, bei dem entsprechende Distanzsensoren in unterschiedlichen Messmodi betrieben werden können. Weiterhin ist der DE 3540704 A1 eine Einrichtung zur Abstandsmessung mit Ultraschallsensoren zu entnehmen, die bei Annäherung an ein Hindernis in unterschiedlicher Reihenfolge angesteuert werden können.

### Offenbarung der Erfindung

Aufgabe der vorliegenden Erfindung ist es, ein verbessertes Verfahren der eingangs genannten Art bereitzustellen, das es auf einfache Weise ermöglicht, den Wechsel zwischen den beiden Funktionen Parklückenvermessung und Parkpilot zu optimieren.

Diese Aufgabe wird durch ein Verfahren nach Anspruch 1 gelöst.

Die der vorliegenden Erfindung zugrundeliegende Idee besteht darin, dass die Abstandssensoren in beiden Modi zeitlich derart angesteuert werden, dass sie mit unterschiedlichen Sendefolgen aktiviert werden, wobei zwischen den unterschiedlichen Sendefolgen der beiden Modi in Abhängigkeit von der Bewegung des Fahrzeugs automatisch umgeschaltet wird.

Wesentlicher Grundgedanke der Erfindung ist es dabei, dass sich die beiden Messmodi nicht mehr durch unterschiedliche Sensorkennlinien, die unter Zeitverlust und damit unter Reduzierung der erzielbaren Messgenauigkeit abwechselnd geladen werden müssen, sondern lediglich durch eine unterschiedliche Reihenfolge der Messungen aller im jeweiligen Messmodus gebrauchten Abstandssensoren voneinander unterscheiden, wobei die Charakteristik bzw. Sensorkennlinie jedes einzelnen Abstandssensor konstant bleibt.

Ein wesentlicher Vorteil des erfindungsgemäßen Verfahrens besteht darin, dass ein Wechsel zwischen beiden Messmodi mit keinerlei Zeitverlusten verbunden ist. Auch erfolgt ein Wechsel zwischen den beiden Modi in Abhängigkeit von bestimmten Bewegungszuständen automatisch, was wiederum den Vorteil mit sich bringt, dass für eine Aktivierung einer Funktion keine vorherige Deaktivierung der anderen Funktion notwendig ist.

Wenn beispielsweise die Parklückenvermessung aktiviert ist und eine Situation eintritt, in der der Fahrer eine Unterstützung durch den Parkpilot benötigt, so ist hierfür weder ein aktives Umschalten durch den Fahrer erforderlich, noch entsteht bei einem automatischen Wechsel zum Parkpilot-Modus eine Übergangsphase, in der keine Abstandsmessungen ausgeführt werden. Entsprechendes gilt für den umgekehrten Fall, wenn für eine neue Parklückensuche erneut die Funktion Parklückenvermessung aktiviert wird, so dass der Fahrer auch hier den Komfort genießen kann, keine Umschaltung vornehmen zu müssen und auch bei diesem Übergang zwischen den beiden Messmodi keine nachteiligen Mess-Ungenauigkeiten befürchten zu müssen. Das wiederum führt gerade auch vor dem Hintergrund einer stark zunehmenden Anzahl von Elektronikkomponenten und Fahrerassistenzsystemen im Fahrzeug zu einer Erhöhung der Akzeptanz von Parklückenvermessung und Parkpilot beim Fahrer des Kraftfahrzeugs.

Vorteilhafte Weiterbildungen und Verbesserungen des erfindungsgemäßen Verfahrens ergeben sich aus den abhängigen Ansprüchen.

So ist es beispielsweise besonders günstig, wenn die Abstandssensoren in einem dritten Modus betrieben werden können, in welchem sie mit einer Sendefolge aktiviert werden, in der gleichzeitig sowohl die Vermessung von Parklücken als auch die Einparkhilfefunktion zur Warnung vor drohenden Kollisionen ausgeführt wird. Vorteilhafterweise hängt auch die Aktivierung dieses dritten Modus von bestimmten Bewegungszuständen des Fahrzeugs ab, wobei auch hierbei keine Neuladung von Sensorkennlinien erforderlich ist. Dieser dritte Modus ist lediglich durch eine bestimmte Sendereihenfolge der für beide Funktionen verfügbaren Sensoren definiert. Der Parallelbetrieb beider Funktionen ist so bei optimaler Messgenauigkeit möglich.

Die Bewegungszustände, von denen die Umschaltung zwischen den verschiedenen Sendereihenfolgen der unterschiedlichen Messmodi abhängen kann, können insbesondere die Fahrzeuggeschwindigkeit umfassen, wie es an sich auch im vorgenannten Stand der Technik der Fall ist. So ist es besonders vorteilhaft, wenn bei einer höheren Geschwindigkeit die Sendefolge so gesteuert wird, dass die den seitlichen Fahrzeugbereich erfassenden Abstandssensoren innerhalb eines vollständigen Messzyklus häufiger ein Messsignal aussenden als dies bei geringeren Geschwindigkeiten der Fall ist.

Alternativ dazu oder ergänzend kann die Umschaltung zwischen den verschiedenen Sendereihenfolgen der unterschiedlichen Messmodi in Abhängigkeit von der Fahrzeugbeschleunigung erfolgen, so dass beispielsweise bei bestimmten Verzögerungen eine Sendereihenfolge gewählt wird, die auf die Parkpilot-Funktion optimiert ist, und/oder bei bestimmten Beschleunigungen des Fahrzeugs die Sendefolge der Abstandssensoren besonders auf die Parklückenvermessung abgestellt wird.

Besonders vorteilhaft ist es aber, wenn die Umschaltung in Abhängigkeit von der vom Wegsensor erfassten Wegstrecke erfolgt, die das Fahrzeug während der Zykluszeit einer Sendefolge oder einer bestimmten Anzahl von Sendefolgen zurücklegt. Als Zykluszeit einer Sendefolge kann auch die effektive Zykluszeit eines seitlichen Sensors betrachtet werden. Diese Umschaltung erfolgt vorzugsweise derart, dass die zurückgelegte Wegstrecke stets unterhalb einer festgelegten oder festlegbaren Grenze liegt. Auf diese Weise ist die Sendefolge bzw. der Messmodus nicht mehr nur von Parametern der Fahrzeugbewegung wie der Fahrzeuggeschwindigkeit und/oder der Fahrzeugbeschleunigung abhängig, sondern die Sendefolge bzw. der Messmodus hängt sowohl von einer Fahrzeugbewegung, nämlich der gefahrenen Wegstrecke, als auch von der Umgebung des Fahrzeugs ab. Hierbei ist von besondere Bedeutung, dass die zur Verifikation einer Abstandsmessung übliche Messungswiederholung, die als sogenannter "Doppelschuss" bezeichnet wird, entscheidend von der Umgebung beeinflusst wird. Bei diesem Verfahren zur Verifikation eines Messergebnisses wird eine gemessene Entfernung nur dann weiterverarbeitet, wenn ihr Echowert durch die unmittelbar nachfolgende zweite Messung bestätigt wird. Dieses Verfahren stellt einen ersten Filterschritt dar, durch den die Stabilität und Zuverlässigkeit der gemessenen Entfernungen signifikant erhöht wird. Da mit steigender Anzahl von Doppelschüssen auch die vom Fahrzeug während der Zykluszeit einer Sendefolge zurückgelegte Wegstrecke wächst, hängt die Ansteuerung der Abstandssensoren in einer bestimmten Sendereihenfolge über diese gefahrene Wegstrecke mittelbar auch von der Umgebung des Fahrzeuges ab.

Gemäß einer besonders bevorzugten Ausführungsvariante der Erfindung wird vorgeschlagen, dass diese Doppelschuss-Ansteuerung zumindest einzelner Abstandssensoren nur dann erfolgt, wenn das Hindernis in einem Abstand festgestellt wird, der kleiner ist als ein festgelegter oder vom Benutzer festlegbarer Grenzabstand. Da sich die Ausführung von Doppelschüssen auf die Abtastweite der seitlichen Abstandsensoren und damit negativ auf die Genauigkeit der Parklückenvermessungs-Funktion auswirkt, ist es von besonderem Vorteil, wenn die Häufigkeit von Doppelschüssen beim Vorbeifahren an einer Parklücke insbesondere bei höheren Geschwindigkeiten möglichst klein ist. Durch die vorgeschlagene Festlegung eines Grenzabstands wird erreicht, dass beim Vorbeifahren an einer Parklücke durch die seitlichen Sensoren nur dann Doppelschüsse ausgelöst bzw. getriggert werden, wenn der Abstand zwischen dem vorbeifahrenden und den geparkten Fahrzeugen geringer ist als der festgelegte Grenzabstand. Der Vorbeifahrabstand an seitlichen Hindernissen nimmt in der Regel mit steigender Fahrzeuggeschwindigkeit zu, da die meisten Fahrer bei schnellerer Fahrt dazu neigen, mehr Abstand zu den geparkten Fahrzeugen zu einzuhalten. Dies führt dann bei höheren Geschwindigkeiten automatisch zu einer Erhöhung der Abtastrate der äußeren Sensoren und damit zu einer verbesserten Detektion der geparkten Fahrzeuge bzw. der gegebenenfalls dazwischen liegenden Parklücken.

Vorzugsweise wird hierbei vorgeschlagen, dass der Grenzabstand zwischen 0,8 und 1,2 Meter liegt oder einstellbar ist, wobei er vorteilhafterweise bei ca. 1 Meter liegen kann.

Besonders vorteilhaft ist es dabei ferner, wenn nur die äußeren Abstandssensoren, welche den seitlich neben dem Fahrzeug befindlichen Bereich erfassen, gemäß der vorgenannten Einschränkung bezüglich des Grenzabstandes angesteuert werden, da gerade die seitlichen Sensoren für die Parklückenvermessung von besonderer Bedeutung sind. Es können jedoch auch die in dem Front- oder Heckstoßfänger des Fahrzeugs angeordneten Abstandssensoren in der vorgenannten Art angesteuert werden.

Gegenstand der vorliegenden Erfindung ist ferner ein entsprechendes Fahrerassistenzsystem, das zur Durchführung des Verfahrens der vorangehend beschriebenen Art geeignet ist. Eine derartiges System umfasst mehrere jeweils den Nahbereich wenigstens abschnittsweise erfassende Abstandssensoren, wenigstens einen Wegsensor und mindestens eine mit dem Wegsensor und den Abstandssensoren verbundene Steuereinheit, durch die die Abstandssensoren in Abhängigkeit von den vom Wegsensor gelieferten Signalen oder davon ableitbaren Größen in unterschiedlichen Sendefolgen aktiviert werden können.

Die Erfindung betrifft ferner ein mit einem derartigen System ausgerüstetes Fahrzeug.

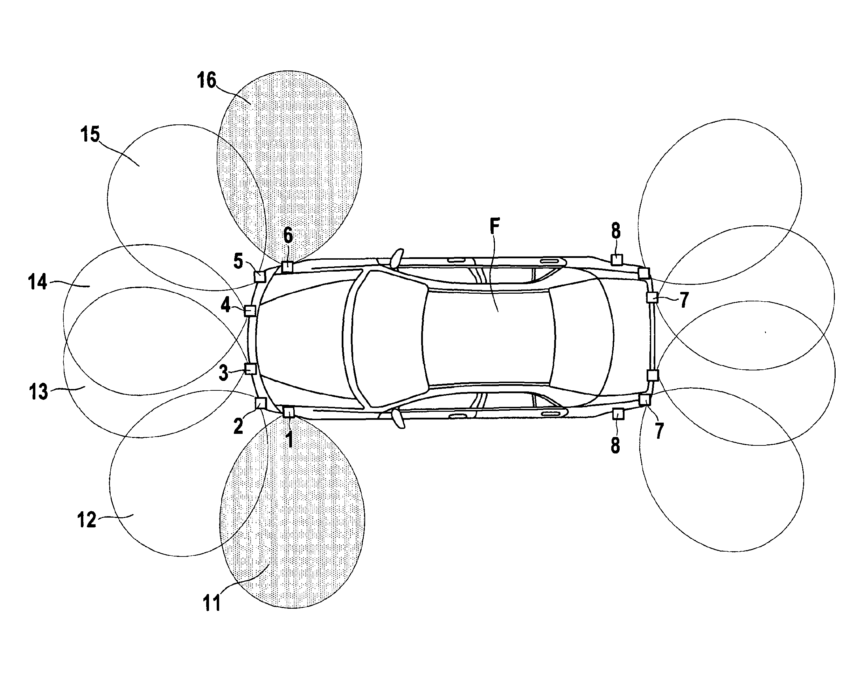

### Kurze Beschreibung der Zeichnung

In der Zeichnung ist ein Ausführungsbeispiel der Erfindung dargestellt, das in der nachfolgenden Beschreibung näher erläutert wird. Die Zeichnung zeigt eine schematische Darstellung eines mit einem erfindungsgemäßen System ausgerüstetes Kraftfahrzeug.

### Ausführungsform der Erfindung

Die Zeichnung zeigt ein Kraftfahrzeug F, das sowohl vorne als auch hinten mit jeweils sechs Abstandssensoren versehen ist, die auf Ultraschallbasis arbeiten. Die vier im Frontstoßfänger des Fahrzeugs F angeordneten Abstandssensoren 2, 3, 4 und 5 erfassen den vor dem Fahrzeug F befindlichen Nahbereich, während die beiden im vorderen Bereich des Fahrzeug F jeweils seitlich angeordneten Abstandssensoren 1 und 6 den links bzw. rechts neben dem Fahrzeug liegenden Nahbereich erfassen. Die keulenförmigen Erfassungsbereiche 11-16 dieser sechs Abstandssensoren 1-6 sind jeweils schematisch dargestellt. Obwohl das erfindungsgemäße Verfahren auch mit anderen Anzahlen von Abstandssensoren sowie mit den im Heckstoßfänger des Fahrzeugs F angeordneten Abstandssensoren 7 und den im hinteren Bereich des Fahrzeug F seitlich angeordneten Abstandssensoren 8 ausgeführt werden kann, wird es im folgenden lediglich beispielhaft für die vorderen Sensoren 1-6 beschrieben.

Das ultraschall-basierte System dient sowohl zur Parklückenvermessung als auch zur Ausführung der Parkpilot-Funktion. Die Erfassungsbereiche 11 und 16 der äußeren Sensoren 1 und 6, die für die Parklückenvermessung verwendet werden, sind dunkler schraffiert als die Erfassungsbereiche 12-15 der nach vorne gerichteten Sensoren 2-5, die ausschließlich für die Parkpilot-Funktion verwendet werden. Um eine optimale Parkpilot-Funktionalität zu gewährleisten, kommen die äußeren Sensoren 1 und 6 sowohl für die Parklückenvermessung als auch für die Parkpilot-Funktion zum Einsatz.

Die Sensoren 1-8 arbeiten nach dem Puls-Echo-Prinzip, bei dem ein Ultraschall-Puls ausgesendet und von in der Nähe des Fahrzeugs F bzw. in der Nähe der Sensoren 1-6 befindlichen Objekten reflektiert wird. Die Entfernung zu den Objekten wird in an sich bekannter Weise für jeden Sensor 1-6 bzw. für jedes Sensor-Paar aus der Schalllaufzeit, die zwischen dem Aussenden des Schall-Pulses und dem Eintreffen des reflektierten Echos auf der Sensor-Membran verstreicht, berechnet.

Ist die Parkpilot-Funktion aktiviert, senden nicht alle Sensoren 1-6 gleichzeitig Ultraschall-Pulse aus, sondern zeitlich relativ zueinander versetzt. Welche Sensoren 1-6 wann senden ist in sogenannten Sendefolgen festgelegt. Eine Sendefolge besteht aus mehreren hintereinander abgearbeiteten Messzyklen. In dem nachfolgend beispielhaft dargestellten Zyklus mit vier aufeinanderfolgenden Takten I-IV senden jeweils nur bestimmte Sensoren gleichzeitig:
I. Nr. 1 und 5
II. Nr. 2 und 6
III. Nr. 4
IV. Nr. 3

Die reflektierten Echos werden anschließend in an sich bekannter Weise sowohl von denjenigen Sensoren, die einen Puls aussendeten, als auch von den jeweils benachbarten Sensoren detektiert (sogenannte Kreuzecho-Detektion). Durch dieses Verfahren können insbesondere die Kreuzechos den richtigen Sendern 1-6 zugeordnet werden, so dass vorteilhafterweise nicht nur die direkte Entfernung vom Stoßfänger zu den Objekten sondern auch deren laterale Position bezüglich des Stoßfängers ermittelt werden kann.

Die Anforderungen an ein System zur Parklückenvermessung verlangen dagegen eine möglichst häufige Entfernungsmessung bzw. Abtastung der seitlichen Umgebung des Fahrzeugs. Das bedeutet, dass die seitlich angebrachten Sensoren Nr. 1 oder 6 (je nach gewählter Seite) möglichst häufig senden und empfangen sollen. Dabei ist klar, dass diese Anforderung umso besser eingehalten werden muss, je schneller das Fahrzeug F fährt. Übertragen auf die vorgenannte Sendefolge bedeutet dies, dass der gewählte Sensor in jedem Zyklus senden bzw. empfangen soll. Diese Anforderung ist nicht mit dem bei der Parkpilot-Funktion angewendeten Verfahren verträglich, da z.B. in der oben angegebenen Sendefolge die äußeren Sensoren 1 oder 6 nur in jedem vierten Takt I bzw. II einen Ultraschall-Puls aussenden.

Deshalb wird die Sendefolge erfindungsgemäß in Abhängigkeit von der Bewegung, hier beispielsweise der Geschwindigkeit des Fahrzeugs F so variiert, dass eine automatische Umschaltung der Funktionen stattfinden kann und innerhalb gewisser Grenzen sogar beide Funktionen gleichzeitig aktiviert sein können. Hierzu betrachtet man die mit der Parklückenvermessung verbundene Abtastlänge, d.h. die gefahrene Strecke zwischen zwei aufeinander folgenden Ultraschall-Messungen eines seitlichen Sensors 1 oder 6: Geht man z.B. von einer Abtastlänge von maximal 10 cm und einer Zykluszeit von 25 ms aus, folgt daraus eine Fahrzeuggeschwindigkeit von 4,0 m/s bzw. 14,4 km/h. Entsprechend erhält man für eine Zykluszeit von 100 ms (entspricht der effektiven Zykluszeit eines seitlichen Sensors 1 bzw. 6 im Parkpilot-Modus) eine Geschwindigkeit von 1,0 m/s bzw. 3,6 km/h. Daraus ergibt sich folgendes:

In einem unteren Geschwindigkeitsbereich beispielsweise unterhalb von ca. 3,6 km/h können sowohl die Parkpilot-Funktion als auch die Parklückenvermessung ohne Funktionseinschränkung parallel betrieben werden, da einerseits die für den Parkpilot benötigte Sendefolge als auch die für die Parklückenvermessung erforderliche Abtastlänge eingehalten werden können.

In einem mittleren Geschwindigkeitsbereich beispielsweise zwischen ca. 3,6 km/h und 14,4 km/h wird die Sendefolge derart variiert, dass beide Funktionalitäten mit möglichst wenigen Einschränkungen hinsichtlich Genauigkeit und Reaktionszeit realisiert sind. Die Sendefolge kann dann folgendermaßen aussehen:
I. Nr. 1 und 5
II. Nr. 2 und 6
III. Nr. 1 und 4
IV. Nr. 3 und 6

In einem oberen Geschwindigkeitsbereich beispielsweise oberhalb von ca. 14,4 km/h kann das System die Funktionalität der Parklückenvermessung nur noch dann zuverlässig ausführen, wenn die maximale, von der Geschwindigkeit abhängige Genauigkeit der Parklückenvermessung aufrecht erhalten wird. Erfindungsgemäß wird daher vorgeschlagen, die vom Messprogramm gesteuerte Sendefolge geschwindigkeitsabhängig und entsprechend den oben beschriebenen Schlussfolgerungen einzustellen und damit einen parallelen Betrieb von Parkpilot und Parklückenvermessung nur im unteren und mittleren Geschwindigkeitsbereich zu realisieren.

Vorzugsweise kann der kritische Geschwindigkeitsbereich zwischen 3,6 km/h und 14,4 km/h darüber hinaus gegebenenfalls nochmals unterteilt werden, indem man die Sendefolge beispielsweise so einstellt, dass der parallele Betrieb unter 9,0 km/h auf die Parkpilot-Funktion (bei gleichzeitiger geringer Reduzierung der Genauigkeit der Parklückenvermessung) und über 9,0 km/h auf die maximale Genauigkeit der Parklückenvermessung (bei gleichzeitiger Darstellung einer Parkpilot-Grundfunktionalität, z.B. mit vergrößerter Reaktionszeit) optimiert wird.

## Patentansprüche

1. Verfahren zum Betreiben eines Einparkhilfesystems für ein Fahrzeug (F) mit mehreren jeweils den Nahbereich (11-16) des Fahrzeugs (F) wenigstens abschnittsweise erfassenden Abstandssensoren (1-6) und mit wenigstens einem den von dem Fahrzeug (F) zurückgelegten Weg erfassenden Wegsensor,
wobei die Abstandssensoren (1-6) in einem ersten Modus betrieben werden können, in welchem zur Vermessung von Parklücken aus den während des Vorbeifahrens an einer Parklücke gemessenen Werten zumindest einzelner Sensoren (1, 6) die Länge und/oder Breite der Parklücke bestimmt wird,
und wobei die Abstandssensoren (1-6) in mindestens einem weiteren Modus betrieben werden können, in welchem sie als Einparkhilfe zur Vermeidung von Kollisionen eingesetzt werden,
**dadurch gekennzeichnet,**
**dass** die Abstandssensoren (1-6) in den beiden Modi zeitlich mit unterschiedlichen Sendefolgen aktiviert werden,
wobei zwischen den unterschiedlichen Sendefolgen in Abhängigkeit von der Bewegung des Fahrzeugs (F) umgeschaltet wird, wobei sich der erste und der mindestens eine weitere Modus durch eine unterschiedliche Reihenfolge der Messungen aller im jeweiligen Messmodus gebrauchten Abstandssensoren voneinander unterscheiden, und wobei die Umschaltung in Abhängigkeit von der vom Wegsensor erfassten Wegstrecke erfolgt, die das Fahrzeug (F) während der Zykluszeit einer Sendefolge zurücklegt.

2. Verfahren nach Anspruch 1, **dadurch gekennzeichnet, dass** die Abstandssensoren (1-6) in einem dritten Modus betrieben werden können, in welchem sie mit einer Sendefolge aktiviert werden, in der gleichzeitig sowohl die Vermessung von Parklücken als auch die Warnung vor drohenden Kollisionen ausgeführt wird.

3. Verfahren nach Anspruch 1 oder 2, **dadurch gekennzeichnet, dass** die Umschaltung in Abhängigkeit von der Fahrzeuggeschwindigkeit erfolgt.

4. Verfahren nach einem der Ansprüche 1 bis 3, **dadurch gekennzeichnet, dass** die Umschaltung in Abhängigkeit von der Fahrzeugbeschleunigung erfolgt.

5. Verfahren nach einem der vorherigen Ansprüche, **dadurch gekennzeichnet, dass** zumindest einzelne Abstandssensoren (1, 6) derart angesteuert werden, dass sie unmittelbar nach Detektion eines Hindernisses einen zweites mal aktiviert werden, wobei diese zweite Aktivierung nur dann erfolgt, wenn das Hindernis in einem Abstand detektiert wird, der kleiner ist als ein festgelegter oder festlegbarer Grenzabstand.

6. Verfahren nach Anspruch 5, **daduch gekennzeichnet**, dass der Grenzabstand zwischen 0,8 und 1,2 Meter, vorzugsweise bei etwa 1 Meter, liegt.

7. Verfahren nach einem der vorherigen Ansprüche, **dadurch gekennzeichnet, dass** nur die äußeren Abstandssensoren (1, 6), welche den seitlich neben dem Fahrzeug (F) befindlichen Bereich erfassen, nach Anspruch 6 oder 7 angesteuert werden.

8. Einparkhilfesystem zur Durchführung des Verfahrens nach wenigstens einem der Ansprüche 1-7, umfassend mehrere jeweils den Nahbereich (11-16) wenigstens abschnittsweise erfassende Abstandssensoren (1-6), wenigstens einen Wegsensor und eine mit dem Wegsensor und den Abstandssensoren (1-6) verbundene Steuereinheit, durch welche die Abstandssensoren (1-6) in unterschiedlichen Sendefolgen aktivierbar sind, wobei die Abstandssensoren (1-6) in einem ersten Modus betrieben werden können, in welchem zur Vermessung von Parklücken aus den während des Vorbeifahrens an einer Parklücke gemessenen Werten zumindest einzelner Sensoren (1, 6) die Länge und/oder Breite der Parklücke bestimmt wird, und wobei die Abstandssensoren (1-6) in mindestens einem weiteren Modus betrieben werden können, in welchem sie als Einparkhilfe zur Vermeidung von Kollisionen eingesetzt werden, wobei zwischen den unterschiedlichen Sendefolgen in Abhängigkeit von der Bewegung des Fahrzeugs (F) umgeschaltet wird, wobei sich der erste und der mindestens eine weitere Modus durch eine unterschiedliche Reihenfolge der Messungen aller im jeweiligen Messmodus gebrauchten Abstandssensoren voneinander unterscheiden, und wobei die Umschaltung in Abhängigkeit von der vom Wegsensor erfassten Wegstrecke erfolgt, die das Fahrzeug (F) während der Zykluszeit einer Sendefolge zurücklegt.

9. Fahrzeug mit einem Einparkhilfesystem nach Anspruch 8.

## Claims

1. Method for operating a parking assistance system for a vehicle (F) having a plurality of distance sensors (1-6) which each sense, at least partially, the vicinity (11-16) of the vehicle (F), and having at least one travel sensor that senses the travel carried out by the vehicle (F), wherein the distance sensors (1-6) can be operated in a first mode in which, in order to measure parking spaces the length and/or width of the parking space is determined on the basis of the values of at least individual sensors (1, 6) which are measured while the vehicle travels past a parking space, and wherein the distance sensors (1-6) can be operated in at least one further mode in which they are used as a parking assistance for avoiding collisions, **characterized in that** in terms of timing the distance sensors (1-6) are activated with different transmission sequences in the two modes,
wherein switching over between the different transmission sequences take place as a function of the movement of the vehicle (F), wherein the first and at least a further mode differ from one another in having a different sequence of the measurements of all the distance sensors used in the respective measuring mode, and wherein the switching over takes place as a function of the travelled distance which is detected by the travel sensor and which the vehicle (F) travels during the cycle time of a transmission sequence.

2. Method according to Claim 1, **characterized in that** the distance sensors (1-6) can be operated in a third mode in which they are activated with a transmission sequence in which both the parking spaces are measured and the warning of imminent collisions is given at the same time.

3. Method according to Claim 1 or 2, **characterized in that** the switching over takes place as a function of the speed of the vehicle.

4. Method according to one of Claims 1 to 3, **characterized in that** the switching over takes place as a function of the acceleration of the vehicle.

5. Method according to one of the preceding claims, **characterized in that** at least individual distance sensors (1, 6) are actuated in such a way that, immediately after detection of an obstacle, they are activated a second time, wherein this second activation takes place only if the obstacle is detected at a distance which is less than a defined or definable limiting distance.

6. Method according to Claim 5, **characterized in that** the limiting distance is between 0.8 and 1.2 metres, and is preferably approximately 1 metre.

7. Method according to one of the preceding claims, **characterized in that** only the external distance sensors (1, 6) which detect the region to the side of the vehicle (F) are actuated according to Claim 5 or 6.

8. Parking assistance system for carrying out the method according to at least one of Claims 1-7, comprising a plurality of distance sensors (1-6) which each sense, at least partially, the vicinity (11-16), at least one travel sensor and a control unit which is connected to the travel sensor and to the distance sensors (1-6) and which can activate the distance sensors (1-6) in different transmission sequences, wherein the distance sensors (1-6) can be operated in a first mode in which, in order to measure parking spaces the length and/or width of the parking space is determined on the basis of the values of at least individual sensors (1, 6) which are measured while the vehicle travels past a parking space, and wherein the distance sensors (1-6) can be operated in at least one further mode in which they are used as a parking assistance for avoiding collisions, wherein switching over between the different transmission sequences take place as a function of the movement of the vehicle (F), wherein the first and at least a further mode differ from one another in having a different sequence of the measurements of all the distance sensors used in the respective measuring mode, and wherein the switching over takes place as a function of the travelled distance which is detected by the travel sensor and which the vehicle (F) travels during the cycle time of a transmission sequence.

9. Vehicle having a parking assistance system according to Claim 8.

## Revendications

1. Procédé d'exploitation d'un système d'aide au stationnement pour un véhicule (F) comprenant plusieurs détecteurs de distance (1-6) qui détectent au moins dans certaines portions à chaque fois dans la zone de proximité (11-16) du véhicule (F) et comprenant au moins un détecteur de course qui détecte une course parcourue par le véhicule (F),
les détecteurs de distance (1-6) pouvant fonctionner dans un premier mode dans lequel la longueur et/ou la largeur de l'emplacement de stationnement sont déterminées pour le mesurage des emplacements de stationnement à partir des valeurs mesurées par au moins des détecteurs individuels (1, 6) pendant le passage devant un emplacement de stationnement,
et les détecteurs de distance (1-6) pouvant fonctionner dans au moins un mode supplémentaire dans lequel ils sont utilisés comme aide au stationnement pour éviter des collisions,
**caractérisé en ce**
**que** les détecteurs de distance (1-6) sont activés dans les deux modes chronologiquement avec des séquences d'émission différentes,
un basculement entre les différentes séquences d'émission étant effectué en fonction du mouvement du véhicule (F), le premier et l'au moins un mode supplémentaire se différenciant l'un de l'autre par une séquence différente des mesures de tous les détecteurs de distance placés dans le mode de mesure correspondant et le basculement étant effectué en fonction des parcours détectés par le détecteur de course et que le véhicule (F) franchit pendant le temps de cycle d'une séquence d'émission.

2. Procédé selon la revendication 1, **caractérisé en ce que** les détecteurs de distance (1-6) peuvent fonctionner dans un troisième mode dans lequel ils sont activés avec une séquence d'émission dans laquelle sont effectués simultanément à la fois le mesurage des emplacements de stationnement et l'alerte de la menace de collisions.

3. Procédé selon la revendication 1 ou 2, **caractérisé en ce que** le basculement est effectué en fonction de la vitesse du véhicule.

4. Procédé selon l'une des revendications 1 à 3, **caractérisé en ce que** le basculement est effectué en fonction de l'accélération du véhicule.

5. Procédé selon l'une des revendications précédentes, **caractérisé en ce qu'**au moins des détecteurs de distance individuels (1, 6) sont commandés de telle sorte qu'ils sont activés une deuxième fois immédiatement après la détection d'un obstacle, cette deuxième activation n'étant effectuée que lorsque l'obstacle a été détecté à une distance qui est inférieure à une distance limite fixée ou pouvant être fixée.

6. Procédé selon la revendication 5, **caractérisé en ce que** la distance limite est comprise entre 0,8 et 1,2 mètres, de préférence égale à environ 1 mètre.

7. Procédé selon l'une des revendications précédentes, **caractérisé en ce que** seuls sont commandés selon la revendication 5 ou 6 les détecteurs de distance extérieurs (1, 6) qui détectent la zone qui se trouve latéralement à côté du véhicule (F).

8. Système d'aide au stationnement pour mettre en oeuvre le procédé selon au moins l'une des revendications 1 à 7, comprenant plusieurs détecteurs de distance (1-6) qui détectent au moins dans certaines portions à chaque fois dans la zone de proximité (11-16), au moins un détecteur de course et une unité de commande reliée avec le détecteur de course et les détecteurs de distance (1-6), par le biais de laquelle les détecteurs de distance (1-6) peuvent être activés dans différentes séquences d'émission, les détecteurs de distance (1-6) pouvant fonctionner dans un premier mode dans lequel la longueur et/ou la largeur de l'emplacement de stationnement sont déterminées pour le mesurage des emplacements de stationnement à partir des valeurs mesurées par au moins des détecteurs individuels (1, 6) pendant le passage devant un emplacement de stationnement,
et les détecteurs de distance (1-6) pouvant fonctionner dans au moins un mode supplémentaire dans lequel ils sont utilisés comme aide au stationnement pour éviter des collisions, un basculement entre les différentes séquences d'émission étant effectué en fonction du mouvement du véhicule (F), le premier et l'au moins un mode supplémentaire se différenciant l'un de l'autre par une séquence différente des mesures de tous les détecteurs de distance placés dans le mode de mesure correspondant et le basculement étant effectué en fonction des parcours détectés par le détecteur de course et que le véhicule (F) franchit pendant le temps de cycle d'une séquence d'émission.

9. Véhicule équipé d'un système d'aide au stationnement selon la revendication 8.
